# EUROPEAN PATENT APPLICATION

(11) **EP 3 011 826 A1**
(43) Date of publication of application: **27.04.2016**
(21) Application number: 14190131.4
(22) Date of filing: 23.10.2014
(51) Int. Cl.: A01G 9/02

(54) **A green wall and rainwater drainage module and assembly, and a method of draining rainwater**

(71) Applicant: Byggros A/S, 5260 Odense S (DK)
(72) Inventor: Kjeld, Anders Kresten, 4300 Holbæk (DK)
(74) Representative: Dahlquist, Andreas Carl-Peter

(57) **Abstract**

A green wall and rainwater drainage module (10), which module comprises a water tank (12) for receiving rain water, which water tank comprises an overflow arrangement for discharging rain water from the water tank. Furthermore, the module comprises a plant holding compartment (14) located adjacent the water tank and having a closed off bottom and an open top, which plant holding compartment defines a space for receiving soil including one or more plants, which closed off bottom defines a drainage opening (30) for discharging rain water from the closed off bottom, and a piece of water absorbing fabric (40) extending between the water tank and the plant holding compartment for transporting rain water from the water tank to the plant holding compartment.

## Description

The present invention relates to a green wall system for collection of rain water and surface water.

### Background of the invention

Surface runoff of urban rainwater, i.e. rainwater carried on impervious urban surfaces such as roads, roofs, etc, are typically collected in drainage wells and transported to a discharge point such as a river, a reservoir or the sea. Some cities separate surface runoff and sewage since surface runoff typically may be discharged to the environment with little or no treatment, whereas sewage water should be treated before being discharged. Other cities use combined sewer systems in which both surface runoff and sewage are collected in the same piping system and consequently, the surface runoff will be treated as sewage, adding to the total load on the sewage treatment facilities.

Both the above methods of handling surface runoff are costly since they involve installing pipes and trenches for transporting water. Further, there is always a risk of overflowing the system. Thus, the current preference and need by most municipalities is to be able to infiltrate the runoff water in local rainwater drainage. Typically, a local rainwater drainage comprises an underground soakaway in which the runoff water from e.g. a building is stored an allowed to slowly infiltrate into the ground. In this way, the need for piping is limited to the distance between the collection point and the soakaway. More modern infiltration systems include raised garden beds such as green rooftops, which may collect a large amount of rain water while avoiding the piping system altogether. The rainwater collected in such green rooftops will be used for watering the plants. It is understood that true local rainwater drainage is independent from any other runoff water system and thus, it must be capable of coping with all rainwater from its connected surface area alone.

Both green roofs and soakaways constitute an investment which typically is out of sight for the public, and thus it may seem easier for many building constructors to simply use the existing runoff systems. It would therefore be an advantage to be able to provide a local rainwater drainage, which will be more visible for the general public and which may contribute to a more attractive appearance of the building. A green roof will be considered to be more attractive than a soakaway, whereas green walls, i.e. green plants located in containers attached to the walls of the building, will be more visible than green roofs. However, the green walls which have been installed in the past have not been considered to be a true local rainwater drainage, since although rainwater may be used for green walls, the rainwater has been collected in separated tanks which in turn have been used as a water source for watering the green wall plants by means of a drip water system. Any surplus rainwater exceeding the limits of the tank must be discharged into the public drainwater system.

JP2007167039A discloses a container for uptake and storage of excess rainwater to avoid flooding. A water storage container collects rain water at heavy rains. A water supply member circulates water from the water storage tank to the water keeping drain mat by capillary action and water is then transferred to the plant mat and the soil and used by the plants. A drain member exits the water out from the container, when the water level of the container exceeds a predetermined level. Use in relation to walls of buildings is not specifically mentioned.

JP8009785A discloses a multilayer planter comprising several layers of cultivation containers with soil and plants. There is a capillary transfer of water via a tubular cloth from a water tank to the top cultivation container. The water seeping through the top container then passes through holes in the front wall of the top container to enter the container below. The cultivation containers are joined at the back to a back board and a base plate joints the back board at the bottom.

JP6343349A discloses a planter which comprises a water tank at the inner bottom of the planter and a water absorbing cloth is vertically arranged to transfer water from the water tank to the soil in the planter.

JP03510661B2 discloses a cultivation container/planter comprising 2 containers on top of each other, where the top container comprises soil and plants and the bottom container is a water tank. There is a connection in the form of a hole between the soil compartment and the water tank beneath where a cloth is disposed and the cloth transfers water from the water tank up to the soil.

JP6165621A discloses a cultivation box for growing plants comprising two compartments, the bottom one being a water tank and the top container comprising soil for growing plants. There is an automatic water sucking mechanism from the water tank to the soil tank.

CN203307968U discloses a Zamiifolia plant planting frame. The outer side wall of the frame is provided with an opening section. A planting space is filled with nutrition soil layer and a zamiifolia plant. The bottom and side wall of the planting space is provided with a heat insulating layer, a waterproof layer, a root hindering layer and a drop irrigation pipe.

WO2014041850A1 discloses a wall surface flower bed structure having a through-hole for water flow, which is formed on a bottom face and a side surface. A plant accommodation pot accommodates the root part of plant covered with water-permeable raw material having water-permeability, and in which upper surface is opened. A water accumulating part is provided for storing water.

JP2006129842A discloses a the three-dimensional flower bed apparatus having a flower bed main body composed of dish-shaped water tank for storing water.

JP05443680B2 discloses vegetable cultivation object for three-dimensional vegetable cultivation. The object has multiple water retention plant growth layers laminated in a sliding direction on both sides of a core. The core passes the drainage system fluid where the fluid passes into the detached core and reaches the water retention plant growth layer.

CN203457578U discloses a building outer wall of artificial plant. The plant wallboard is provided with sawtooth-shaped grooves. The upper part of the plant wall is provided with an outdoor rainwater collecting device.

CN203027804U discloses a three-dimensional green box having a front panel with water outlet holes, a left panel, a right panel and a rear panel that is provided with a spliced structure.

CN202340508U discloses a catchment type vertical greening module having a box body provided with an external connecting plate and horizontal and vertical planting grooves formed in a box body where the bottom part of the groove is provided with water leaking holes.

Although some or most of the above systems may be used in connection with a green wall which is irrigated by rain water, none of them fulfills the requirement of being a local rainwater drainage.

A local rainwater drainage must be capable of quickly collecting and storing a large amount of rainwater which is subsequently slowly infiltrated in a piece of soil. The infiltrated soil will dry up slowly by either direct evaporation of via plants. The local rainwater drainage should be completely passive and not needing any active components such as pumps, sensors etc. Further, the local rainwater drainage should be completely independent of any community drainage pipes.

Thus, it is an object of the present invention to provide a local rainwater drainage while contributing to the overall green appearance of cities, and in particular of building walls.

### Summary of the invention

The above need and the above object together with numerous other needs and objects, which will be evident from the below detailed description, are according to a first aspect of the present invention obtained by a green wall and rainwater drainage module, the module comprising:
a water tank for receiving rain water, the water tank comprising an overflow arrangement for discharging rain water from the water tank,
a plant holding compartment located adjacent the water tank and having a closed off bottom and an open top, the plant holding compartment defining a space for receiving soil including one or more plants, the closed off bottom defining a drainage opening for discharging rain water from the closed off bottom, and
a piece of water absorbing fabric extending between the water tank and the plant holding compartment for transporting rain water from the water tank to the plant holding compartment.

The module according to the first aspect constitutes the main building block for the green wall. The module is completely passive, just utilizing the principles of capillary suction/soaking and soil infiltration. The module is fastened to the wall (façade) of a building (house etc) together with other modules located above, below and/or beside the module forming an assembly. The vertical and horizontal dimensions of the assembly may vary from a few meters to several tens of meters. The size of an individual module may be about a meter wide and about a meter high. Typically, the assembly comprises a top row of uppermost modules in which the upstream rainwater is initially collected. The rainwater then continues downstream to a module located below the upstream module. The rainwater typically flows from an upstream module to a downstream module located directly vertically below the upstream module, however, other configurations are feasible.

The rain water is collected typically from the roof top of a building but alternative collection points may be contemplated such as drainage from parking lots, roads etc. The rain water is collected upstream and led into the water tank of the uppermost module. The water tank of each module is typically sized for accommodating 5-10 litres of water per square meter of wall area, such as 7 litres per square meter wall area.

The water collected in the water tank of the module is transported into the plant holding compartment via the water absorbing fabric, which extends between the water tank and the plant holding compartment. The water absorbing fabric may be any fabric, such as a non-woven fibrous web material or other thick water absorbing geotextile material having high water suction capability. One such fabric which is suitable for the present purpose is provided by the company Fibertex under the brand name Aquasorb™. The water transported into the plant holding compartment infuses into the soil and provides watering for the plants in the soil and the infused water in the soil not used by the plants will evaporate from the soil. The plants are typically green plants giving the wall a pleasant appearance.

In order to prevent overflow of the module, both the water tank and the plant holding compartment comprise separate water discharge arrangements. Thus, the module provides for two modes of discharging water from the module. The overflow arrangement discharges any excessive rain water to a water tank of a downstream module when the water tank is at full capacity. This constitutes a fast and reliable overflow prevention of the water tank and the risk of overflowing the local rainwater drainage is eliminated for all but the most severe rainfalls.

The plant holding compartment is continuously supplied with rain water from the water tank via the piece of water absorbing fabric. The water is soaked into the piece of water absorbing fabric and distributed within the soil by the capillary effect. When both the piece of water absorbing fabric and the soil is saturated, water will build up in the lower part of the plant holding compartment. In order to avoid overflow of the plant holding compartment or root damage of the plants, the drainage opening will discharge excessive water directly into a downstream plant holding compartment. It is evident that multiple drainage openings may exist for a single module in order to distribute the drainage evenly.

Thus, the two water paths within the module operate with different time scales, i.e. the overflow arrangement will immediately handle any excessive amount of water in the water tank and distribute it downstream, whereas the water soaking capability of the piece of water absorbing fabric will be limiting the transport of water from the water tank to the plant holding assembly and typically the time scale of saturating both the piece of water absorbing fabric and the soil of a single module will be several hours. Thus, the requirement of the local rainwater drainage of quickly collecting water and slowly disposing water is considered to be fulfilled.

According to a further embodiment of the first aspect, the water tank defines a rectangular bottom being connected to four rectangular side walls, the rectangular side walls together defining an upper opening of the water tank for receiving rain water. In order to be able to cover a wall or façade, which is typically rectangular, a rectangular shape of the module is preferred. In this way, the water tank will form a cuboid or semi cuboid. The rain water is led into the cuboid or semi cuboid shaped water tank via the upper opening and may only leave the water tank via either the overflow arrangement or the piece of water absorbing fabric.

According to a further embodiment of the first aspect, the overflow arrangement is defined in a first rectangular side wall of the rectangular sidewalls, the first rectangular sidewall defines a distance between the rectangular bottom and the upper opening being shorter than any of the other rectangular side walls. A simple overflow arrangement which maintains most of the capacity of the water tank is constituted by the first rectangular sidewall or part of that wall defining a shorter height, thereby forming a well defined location for excessive water to be discharged from the water tank into a water tank of a downstream module.

According to a further embodiment of the first aspect, the first rectangular side wall defines an inwardly oriented slope such that the upper opening is larger than the rectangular bottom. In this way, the excessive water overflowing the water tank will remain attached to the outside of the first rectangular sidewall and conveyed inwardly. Flow separation will be taking place at the outer surface of the bottom of the first sidewall, which will then be located above an upper opening of a water tank of a downstream module.

According to a further embodiment of the first aspect, the closed off bottom of the plant holding compartment defines a sloping bottom being connected to a second rectangular side wall of the rectangular side walls of the water tank, preferably, the second rectangular side wall being located opposite the first rectangular side wall. The slope is preferably between 30 and 60 degrees, such as about 45 degrees. This will allow the modules to be stacked directly on top of each other while keeping the outwardly oriented side of the plant holding compartment open for allowing the plants to receive solar light and bypassers to only see a wholly green surface of the building wall.

According to a further embodiment of the first aspect, the piece of water absorbing fabric extends along the second rectangular side wall, via the upper opening and the open top into the plant holding compartment. According to a preferred embodiment, the piece of water absorbing fabric uses the capillary effect to soak water upwards from the water tank over the upper opening of the water tank and downwards into the plant holding compartment. In this way, water may be slowly transferred from the water tank to the plant holding compartment.

According to a further embodiment of the first aspect, the piece of water absorbing fabric extends through an orifice in the second rectangular side wall directly into the plant holding compartment. As an alternative to extending from the water tank via the upper opening into the plant holding compartment, the piece of water absorbing fabric may extend through an otherwise fluid tight orifice in the second wall separating the water tank and the plant holding compartment. In this way, a slightly faster water transport may be achieved, however, the risk of leakage between the water tank and the plant holding compartment is increased.

According to a further embodiment of the first aspect, the drainage opening is defined in the sloping bottom, preferably, the drainage opening is located adjacent the center of the sloping bottom, more preferably additional drainage openings are provided adjacent the center of the sloping bottom. The drainage opening may be located at the bottom of the plant holding compartment, however, in order to prevent a too quick drainage of the plant holding compartment, the drainage openings are preferably located adjacent the center of the sloping bottom. In addition, a centrally located drainage opening will allow the drainage water to drop adjacent the center of the downstream plant holding compartment rather than at the edge of the downstream plant holding compartment.

According to a further embodiment of the first aspect, the sloping bottom comprises a drip rail adjacent the drainage opening. In order to prevent the drainage water from attaching to the down facing side of the sloping bottom and thus discharge at the edge of the downstream plant holding compartment, the drip rail provokes flow detachment adjacent the center of the sloping wall and allows the drainage water to drop adjacent the center of the downstream plant holding compartment, rather than at the edge of the downstream plant holding compartment.

According to a further embodiment of the first aspect, the plant holding compartment comprises non-rectangular side walls extending from the sloping bottom. In order to keep the soil in place in the module, the plant holding compartment preferably comprises non-rectangular side walls.

According to a further embodiment of the first aspect, said sloped bottom and /or of said rectangular side walls comprise fastening rails. Having rails at the downwards facing edge of the sloped bottom will allow the modules to be safely stacked on top of each other. Having rails at the rectangular side walls will allow the module to be fastened to a building wall or façade.

According to a further embodiment of the first aspect, said piece of water absorbing fabric at least partially overlaps said drainage opening. In this way, the drainage of water from the plant holding compartment may be more efficient and it may be avoided to completely saturate the lower part of the plant holding compartment, since by saturating any part of the soil with water, the risk of root damage is increased.

According to a further embodiment of the first aspect, the piece of water absorbing fabric defines a time period of between 1 and 60 minutes from being exposed to water until it is completely saturated with water, preferably between 2 and 30 minutes, more preferably between 5 and 15 minutes, such as about 10 minutes. The piece of water absorbing fabric may be chosen and/or designed such that an appropriate delay in the transport of water from upstream modules to downstream modules.

The above need and the above object together with numerous other needs and objects, which will be evident from the below detailed description, are according to a second aspect of the present invention obtained by a green wall and rainwater drainage assembly comprising a first module according to the first aspect and a second module according to the first aspect, the plant holding compartments of the first module and the second module being filled with soil and plants, the first module being arranged above the second module such that the overflow arrangement of the first module being located directly above the water tank of the second module, and, the drainage opening of the first module being located directly above the plant holding compartment of the second module.

Preferably, the modules are stacked on top of each other along an entire wall section from the roof to the grounds. The capacity of the water tanks, plant holding compartments and pieces of water absorbing fabric may be designed such that the lowest water tank and plant holding compartments are never saturated and that the delay between the upstream and downstream modules of the assembly is approximately bridging the statistically derived average time period between rainfall. It is evident that any of the above described embodiments according to the first aspect may be used in the assembly according to the second aspect.

The above need and the above object together with numerous other needs and objects, which will be evident from the below detailed description, are according to a third aspect of the present invention obtained by a method of draining rainwater by using a green wall, the method comprising:
providing a green wall and rainwater drainage assembly, the assembly comprising a first module and a second module, each of the modules comprising:
   a water tank comprising an overflow arrangement,
   a plant holding compartment located adjacent the water tank and having a closed off bottom and an open top, the plant
holding compartment defining a space comprising soil and one or more plants, the closed off bottom defining a drainage opening, and
   a piece of water absorbing fabric extending between the water tank and the plant holding compartment and at least partially overlapping the drainage opening,
arranging the first module above the second module,
receiving rain water in the water tank of the first module,
transporting rain water from the water tank into the plant holding compartment by using the water absorbing fabric,
transporting rain water from the water tank of the first module to the water tank of the second module using the overflow arrangement of the first module, and
transporting rain water from the plant holding compartment of the first module to the open top of the second module using the drainage opening.

The method according to the third aspect is preferably used together with any of the module according to the first aspect and/or any assembly according to the second aspects.

### Brief description of the drawings

FIG. 1A is a perspective view of an empty module.
FIG. 1B is a side view of an empty module.
FIG. 2A is a perspective view of a module including soil and plants.
FIG. 2B is a side view of a module including soil and plants.
FIG. 3A is a side view of a module having a filled water tank.
FIG. 3B is a side view of a module having a saturated plant holding compartment.
FIG. 3C is a side view of a module having a filled plant holding compartment.
FIG. 4A is a side view of an assembly of two modules when filling the upper module.
FIG. 4B is a side view of an assembly when overflowing the upper module.
FIG. 5A is a perspective view of a module having a pass-through channel.
FIG. 5B is a side view of a module having a pass-through channel.
FIG. 6 is a side view of an assembly of three modules.
FIG. 7 is a side view of an assembly having an orifice.
FIG. 8A is a perspective front view of an assembly of five modules having a mount.
FIG. 8B is a perspective rear view of an assembly of five modules having a mount.
FIG. 8C is a side view of an assembly.

### Detailed description of the drawings

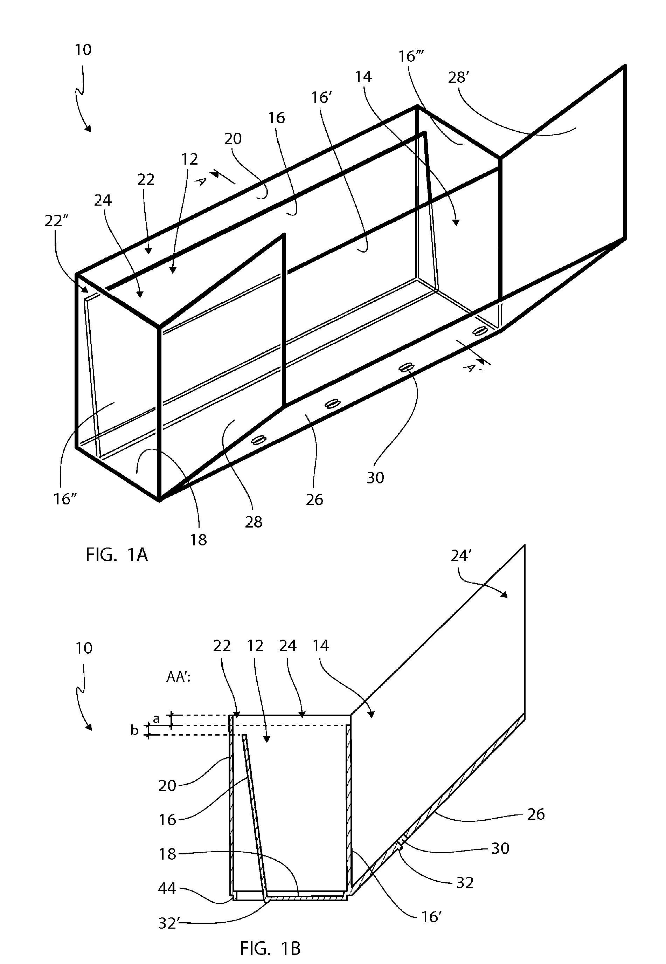

FIG. 1A shows a perspective view of an empty green wall and a rain water module 10. The module 10 comprises a water tank 12 and an adjacent plant holding compartment which are placed in a side-by-side configuration. The module is preferably made of plastic material, however, other robust materials such as metal are equally feasible. The module is intended for being mounted on a wall or façade of a building (not shown).

The water tank 12 comprises a first rectangular side wall 16 constituting a back wall, a second rectangular side wall 16' constituting a front wall, and two opposing additional rectangular side walls 20 forming an enclosed space together with a closed off rectangular bottom 18. A back wall 20 is optionally provided in order to have a surface which may be used for connecting the module 10 to a wall or façade of a building (not shown). The first rectangular side wall 16 defines an overflow arrangement in that it is slightly sloped and slightly shorter than the other rectangular side walls and thus the upper edge of the first rectangular side wall will define the location, at which the overflowing water is discharged when the water tank 12 is full. The water tank 12 further defines an upper opening 24 for receiving rain water.

The plant holding compartment 14 comprises a sloping bottom 26, which together with the second rectangular side wall 16' and two non-rectangular side wall 28 defines a space for receiving soil and plants (not shown). The plant holding compartment 14 defines an upwardly opening 24' and the sloped bottom defines an angle of about 45 degrees. The plant holding compartment 14 has a plurality of drainage openings 30, although a single drainage opening may also be feasible.

FIG. 1B shows a perspective view of an empty green wall and rain water module 10. Drip rails 32 32' are located below the drainage openings 30 and the first rectangular side wall 16 for providing a well defined point at which the rainwater may drop to the downstream module (not shown), which will be explained further below.

The first rectangular sidewall 16 defines a height being a distance b shorter than the second rectangular sidewall 16', which in turn is a distance a shorter than the back wall 20.

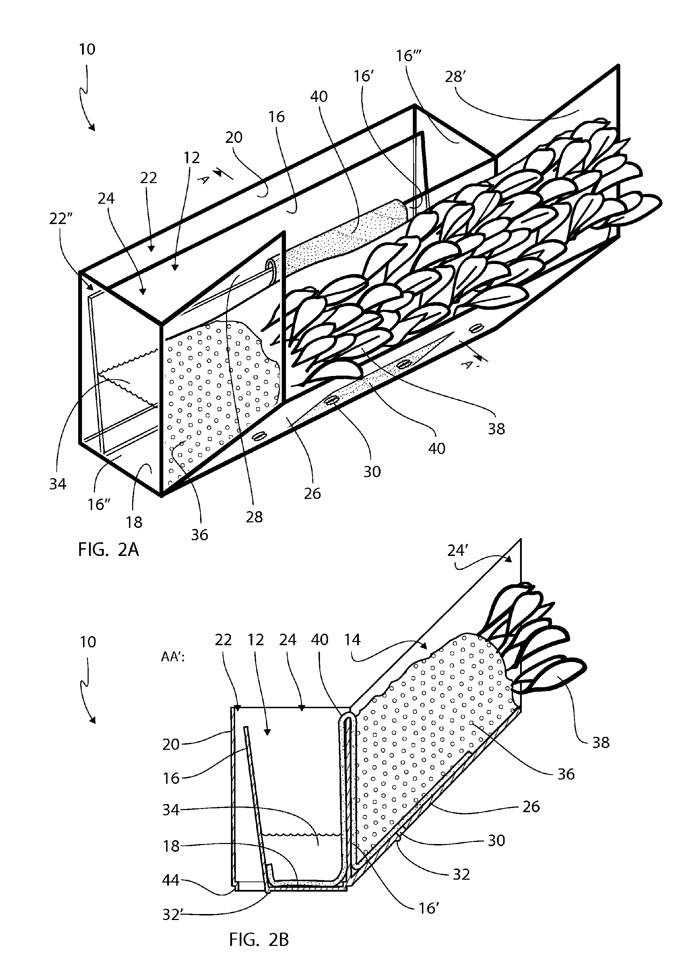

FIG. 2A shows a perspective view of a ready to use green wall and rain water module 10. The water tank 12 has now been filled by rain water 34 and the plant holding compartment 14 has been filled with soil 36 and green plants 38. The green plants extend above and outwardly from the upper opening 24' of the plant holding compartment 14.

A water absorbing fabric 40 is positioned in the module 10. The water absorbing fabric 40 may be the Aquasorb™ from the company Fibertex or any similar fabric. The water absorbing fabric 40 extends from the bottom 18 of the water tank 12, along the second rectangular side wall 16', over the edge defining the opening 24 and into the plant holding compartment 14 following the opposite side of the second rectangular side wall 16', continuing along the sloping bottom 26 and finally overlapping the drainage openings 30.

The water adsorbing fabric 40 will absorb the rain water collected in the water tank 12 by capillary sucking/soaking and transport the water into the plant holding compartment 14. The rate of water transport will depend on the thickness of the fabric and it will generally take from some minutes to some hours for the water absorbing fabric to be saturated and from several hours to several days or weeks until a filled water tank 12 is completely drained into the plant holding compartment 14. By overlapping the drainage openings 38, some of the water will immediately be discharged into the plant holding compartment of a downstream module (not shown).

FIG. 2B shows a side view of a ready to use green wall and rain water module 10. The water adsorbing fabric 40 can be seen covering the rectangular bottom 18 and extending over a large portion of the sloping bottom 26. The soil and the plants are extending above the sloping bottom 26 and the opening 24 exposing a vertical green window for the plants to receive solar light and for the general public to watch the plants.

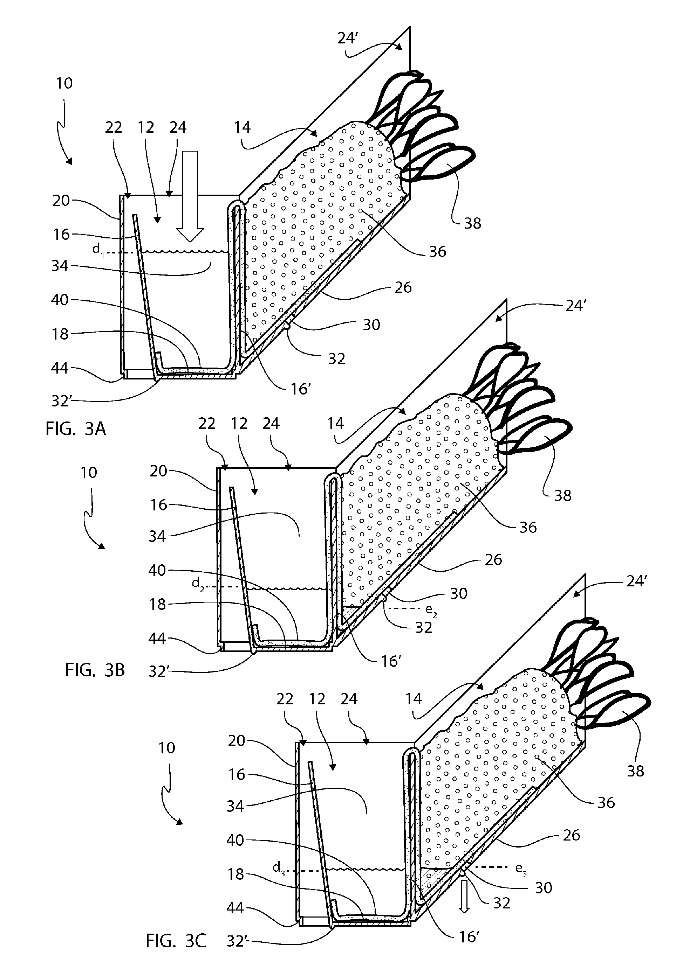

FIG. 3A shows a side view of a green wall and rain water module 10 when receiving rain water 34 from e.g. a building drainage system. The rain water 34 is received in the water tank 12 via the opening 24 as shown by the arrow. The water level in the water tank 12 rises to the indication d₁.

FIG. 3B shows a side view of a green wall and rain water module 10 when rain water 34 is starting to migrate from the water tank 12 to the plant holding compartment 14 via the water absorbing fabric 40. The water level in the water tank 12 sinks to the indication d₂. Within some hours, the water 34 saturates the water absorbing fabric 40 and the soil 36, where after the water level in the plant holding compartment 14 fills the bottom portion of the plant holding compartment 14 and rises to the indication e₂. Some water may already be discharged from the drainage opening 30 to a plant holding compartment of a downstream module (not shown).

FIG. 3C shows a side view of a green wall and rain water module 10 when some additional hours have elapsed. The water levels in the water tank 12 and the plant holding compartment 14 are now at the indications d₃ and e₃. The water level in the plant holding compartment 14 cannot go beyond the level e₃ since any additional water will be discharged from the drainage opening 30 as shown by the arrow to a plant holding compartment of a downstream module (not shown). The water which has saturated the soil 36 will be used by the plants and evaporate over time, such as the next few days depending on the climate.

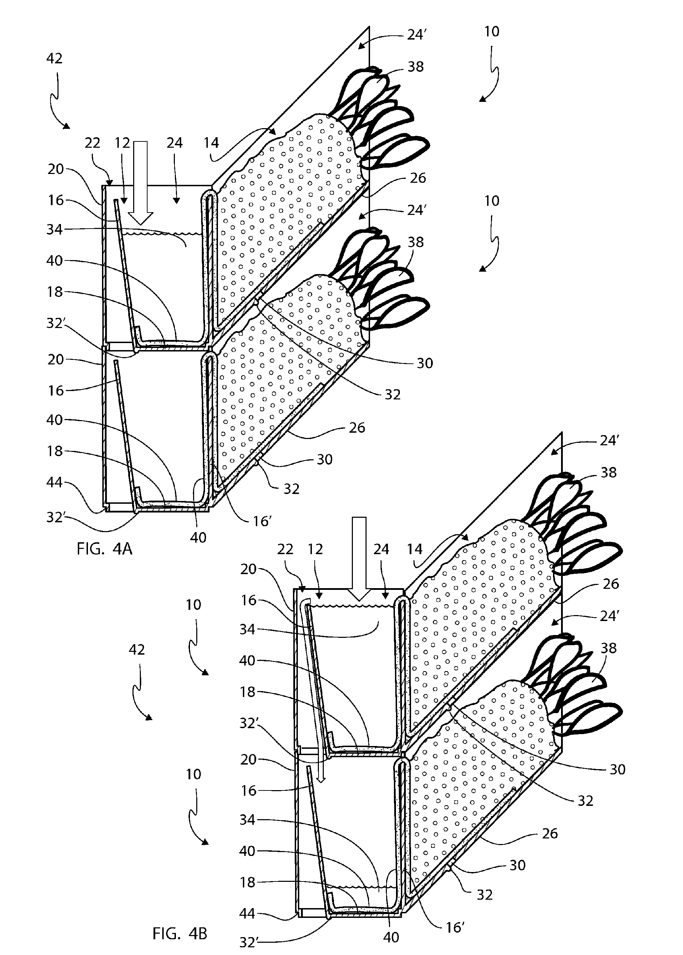

FIG. 4A shows a side view of a green wall and rain water assembly 42 comprising a number of green wall and rain water modules 10 10' stacked on top of each other. The upstream module 10 is arranged above the downstream module 10', such that the overflow arrangement 22 of the upstream module 10 is located directly above the opening 24 of the water tank 11 of the downstream module 10', and, the drainage opening 30 of the upstream module 10 being located directly above the plant holding compartment of the downstream module 10'.

It should be noted that the sloping bottom 26 of the upstream module 10 covers the upwardly oriented part of the opening 24 of the downstream module 10', such that the opening 24 will only be sideward and thus establishing a window. The back wall of the modules 10 10' may be fastened to the façade or wall of the building and by orienting in the assembly 42 multiple modules 10 in a two dimensional (vertical and horizontal) arrangement, the impression of a green wall is generated.

Further, the side walls 16 16' 16" 16'" 28 may optionally comprise rails 44 in order for the modules 10 to be placed safely on top of each other and be securely connected to the wall.

FIG. 4B shows a side view of a green wall and rain water assembly 42 comprising a number of green wall and rain water modules 10 10' stacked on top of each other. When the water tank 12 of the upstream module 10 is at full capacity, any additional water introduced into the water tank 12 of the upstream module 10 will be discharged via the overflow arrangement 22 into the water tank 12 of the downstream module 10' as shown by the arrow.

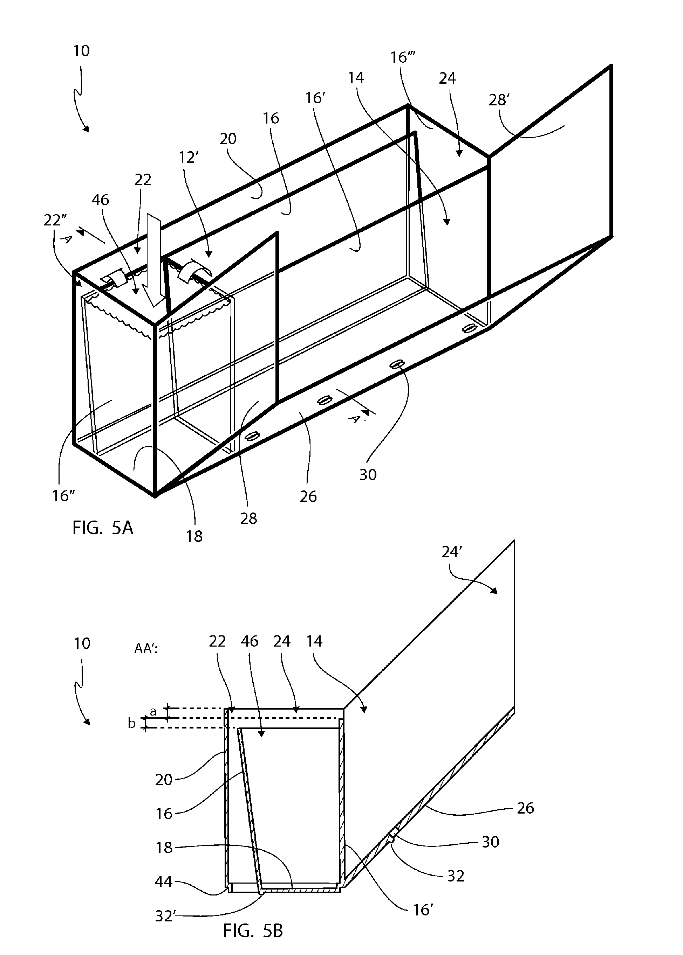

FIG. 5A shows a perspective view of a green wall and rain water module 10 according to an alternative embodiment. In order to achieve a more uniform distribution of the water in the water tanks 12 between upstream and downstream modules 10, the upstream modules 10 may be fitted with a pass through channel 46 allowing some of the water to pass directly to a downstream module.

FIG. 5B shows a side view of a green wall and rain water module 10 according to the alternative embodiment.

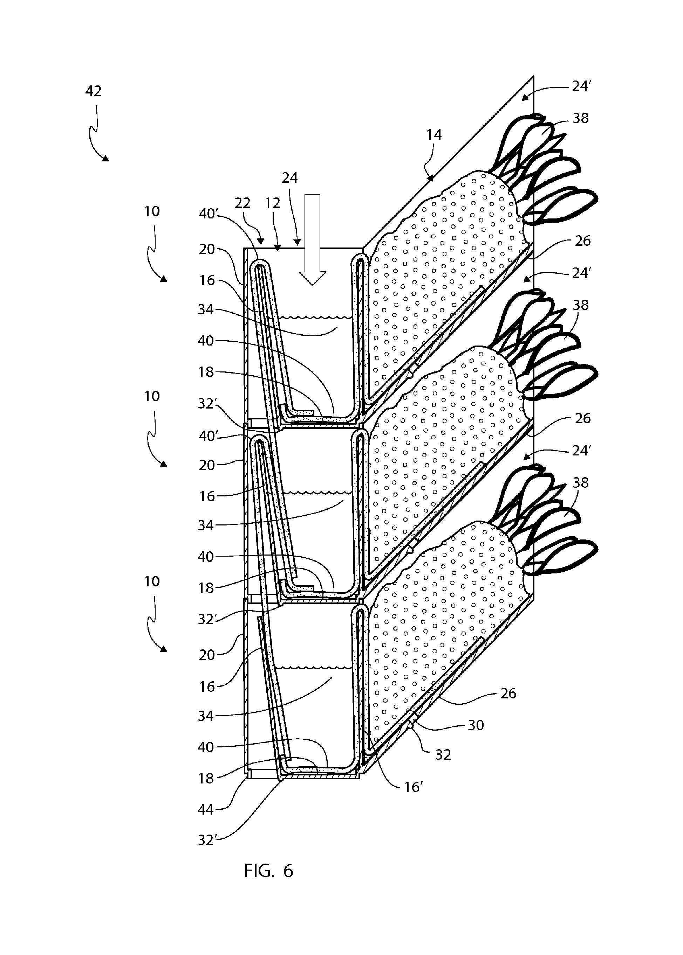

FIG. 6 shows a side view of a green wall and rain water assembly 42' according to an alternative embodiment. In the present embodiment, the water absorbing fabric 40' is made to extend from the water tank 12 of the upstream module to the water tank 12 of the downstream module 10', such that a more uniform distribution of the water in the water tanks 12 between upstream and downstream modules 10 is achieved.

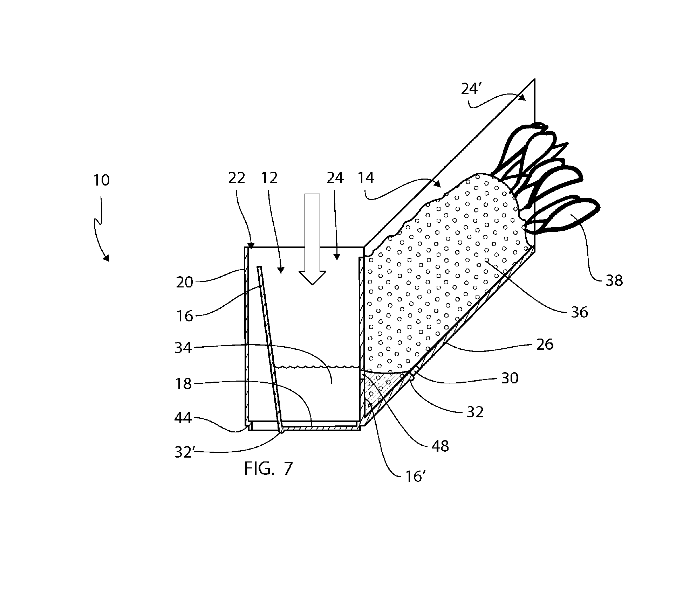

FIG. 7 shows a side view of a green wall and rain water module 10 according to a yet alternative embodiment. In the present embodiment, the water absorbing fabric 40 is made to extend between the water tank 12 and the plant holding compartment 14 via an orifice 48 in the second sidewall 16'. In this way, the transport of water 34 from the water tank 12 to the plant holding compartment 14 may be made faster than the previous embodiments.

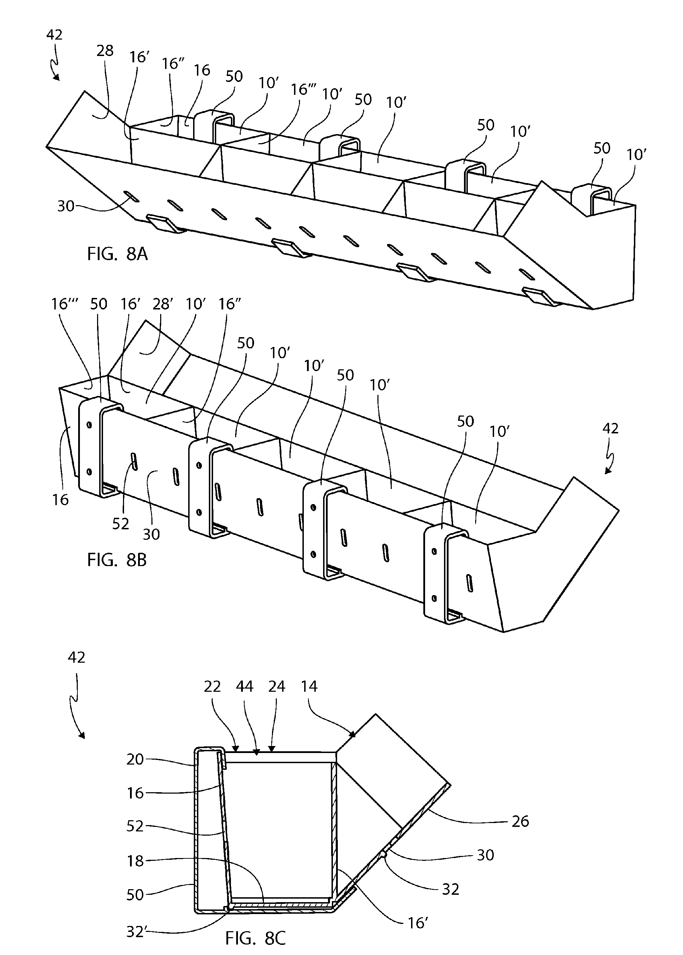

FIG. 8A shows a perspective front view of a green wall and rainwater drainage assembly 42' comprising five modules 10' in a side-by-side configuration. The assembly 42' comprises a wall mount 50. The working principle of the modules 10' correspond to that of the previous embodiments.

FIG. 8B shows a perspective rear view of a green wall and rainwater drainage assembly 42'. The back wall 20' comprises an overflow arrangement in the form of holes 52.

FIG. 8C is a side view of the above assembly 42'. The back wall is slightly sloped in order to allow water from the orifice 52 constituting the overflow arrangement to flow to an underlying assembly 42'.

### List of parts

10. Green wall and rainwater drainage module
12. Water tank
14. Plant holding compartment
16. Rectangular side wall
18. Rectangular bottom
20. Back wall
22. Overflow arrangement
24. Opening
26. Sloping bottom
28. Non-rectangular side wall
30. Drainage opening
32. Drip rail
34. Water
36. Soil
38. Green plants
40. Water absorbing fabric
42. Green wall and rainwater drainage assembly
44. Fastening rails
46. Pass-through channel
48. Orifice
50. Mount
52. Holes

## Claims

1. A green wall and rainwater drainage module, said module comprising:
a water tank for receiving rain water, said water tank comprising an overflow arrangement for discharging rain water from said water tank,
a plant holding compartment located adjacent said water tank and having a closed off bottom and an open top, said plant holding compartment defining a space for receiving soil including one or more plants, said closed off bottom defining a drainage opening for discharging rain water from said closed off bottom, and
a piece of water absorbing fabric extending between said water tank and said plant holding compartment for transporting rain water from said water tank to said plant holding compartment.

2. The module according to claim 1, wherein said water tank defines a rectangular bottom being connected to four rectangular side walls, said rectangular side walls together defining an upper opening of said water tank for receiving rain water.

3. The module according to claim 2, wherein said overflow arrangement is defined in a first rectangular side wall of said rectangular sidewalls, said first rectangular sidewall defining a distance between said rectangular bottom and said upper opening being shorter than any of the other rectangular side walls.

4. The module according to claim 3, wherein said first rectangular side wall defines an inwardly oriented slope such that said upper opening being larger than said rectangular bottom.

5. The module according to any of the claims 2-4, wherein said closed off bottom of said plant holding compartment defines a sloping bottom being connected to a second rectangular side wall of said rectangular side walls of said water tank, preferably.said second rectangular side wall being located opposite said first rectangular side wall.

6. The module according to claim 5, wherein said piece of water absorbing fabric extends along said second rectangular side wall, via said upper opening and said open top into said plant holding compartment.

7. The module according to claim 5, wherein said piece of water absorbing fabric extends through an orifice in said second rectangular side wall directly into said plant holding compartment.

8. The module according to any of the claims 5-7, wherein said drainage opening is defined in said sloping bottom, preferably said drainage opening being located adjacent the center of said sloping bottom, more preferably additional drainage openings are provided adjacent the center of said sloping bottom.

9. The module according to any of the claim 5-8, wherein said sloping bottom comprises a drip rail adjacent said drainage opening.

10. The module according to any of the claims 5-9, wherein said plant holding compartment comprises non-rectangular side walls extending from said sloping bottom.

11. The module according to any of the claims 5-10, wherein said sloped bottom and /or of said rectangular side walls comprise fastening rails.

12. The module according to any of the preceding claims, wherein said piece of water absorbing fabric at least partially overlaps said drainage opening.

13. The module according to any of the preceding claims, wherein said piece of water absorbing fabric defines a time period of between 1 and 60 minutes from being exposed to water until it is completely saturated with water, preferably between 2 and 30 minutes, more preferably between 5 and 15 minutes, such as about 10 minutes.

14. A green wall and rainwater drainage assembly, said assembly comprising a first module according to claim 1 and a second module according to claim 1, said plant holding compartments of said first module and said second module being filled with soil and plants, said first module being arranged above said second module such that said overflow arrangement of said first module being located directly above said water tank of said second module, and, said drainage opening of said first module being located directly above said plant holding compartment of said second module.

15. A method of draining rainwater by using a green wall, said method comprising:
providing a green wall and rainwater drainage assembly, said assembly comprising a first module and a second module, each of said modules comprising:
a water tank comprising an overflow arrangement,
a plant holding compartment located adjacent said water tank and having a closed off bottom and an open top, said plant
holding compartment defining a space comprising soil and one or more plants, said closed off bottom defining a drainage opening, and
a piece of water absorbing fabric extending between said
water tank and said plant holding compartment,
arranging said first module above said second module,
receiving rain water in said water tank of said first module,
transporting rain water from said water tank into said plant holding compartment by using said water absorbing fabric,
transporting rain water from said water tank of said first module to said water tank of said second module using said overflow arrangement of said first module, and
transporting rain water from said plant holding compartment of said first module to said open top of said second module using said drainage opening.
